# EUROPEAN PATENT SPECIFICATION

(11) **EP 2 704 408 B1**
(45) Date of publication and mention of the grant of the patent: **17.05.2017**
(21) Application number: 13181644.9
(22) Date of filing: 26.08.2013
(51) Int. Cl.: H04M 1/725, G06F 3/0488

(54) **Method and apparatus for processing user input**
Verfahren und Vorrichtung zur Verarbeitung von Benutzereingaben
Procédé et appareil pour traiter une entrée utilisateur

(30) Priority: 27.08.2012 KR 20120093816
(43) Date of publication of application: 05.03.2014
(73) Proprietor: Samsung Electronics Co., Ltd, Gyeonggi-do 443-742 (KR)
(72) Inventor: Kim, Taeyeon, 443-742 Gyeonggi-do (KR); Koh, Sanghyuk, 443-742 Gyeonggi-do (KR); Myung, Jihye, 443-742 Gyeonggi-do (KR); Park, Hyunmi, 443-742 Gyeonggi-do (KR); Lee, Chihoon, 443-742 Gyeonggi-do (KR); Lee, Hyemi, 443-742 Gyeonggi-do (KR)
(74) Representative: Nederlandsch Octrooibureau

(56) References cited:
- EP-A1- 2 312 428
- WO-A1-2007/004079
- US-A1- 2007 178 918

## Description

### TECHNICAL FIELD

The present disclosure relates to a method for processing an input in a portable device and a portable device thereof. More particularly, the present disclosure relates to a method for processing an input in a portable device which processes an input according to selection of an input mode during creation of a message and processes an input according to an input mode in one creation window to create one memo to combine the input with one message, and a portable device thereof.

### BACKGROUND

As various input means for a portable terminal have been developed, a user may conveniently create messages using hands or a pen.

However, in order to create texts, images, and equations as one message, a current portable terminal switches a view according to selection of hand writing and equation input modes, and inputs a hand writing or an equation in the switched view. Further, when the user terminates input of the hand writing or the equation, the portable terminal again switches the mode to a text mode which allows a user to enter a hand written text or an equation.

Accordingly, since the user must input the hand writing or the equation while not confirming a created message, inconvenience occurs. In a side of the portable terminal, since the user must display new UI or GUI on a view according to switch of the input mode, a resource is unnecessarily consumed.

EP 2 312 428 A1 discloses a mobile terminal that includes a touch screen and a controller that operates in a first message composition mode for composing a message according to a first message format and a second message composition mode for composing the message according to a second message format.

### SUMMARY

In accordance with an aspect of the present disclosure, a method, as defined in claim 1, processes an input in a portable device, as defined in claim 10, and creates a message from the input according to an identified input mode.

In accordance with an aspect of the present disclosure, a method for processing an input in a portable device, includes detect a user input from an input region, identifying an input mode from a set of input modes including at least one of a text input, a drawing input, an equation input, and a drawing input when the user input corresponds to the input region, and processing the user input according to the input mode to create a message, wherein the message comprises at least one input content processed according to the identified input mode.

In accordance with an aspect of the present disclosure, a method for processing an input in a portable device further includes setting the input mode corresponding to the input when the user input corresponds to an input mode selection region. The processing of the user input includes displaying a key pad when the input mode is a text input mode, identifying a text corresponding to an input through the key pad when the input through the key pad is detected, and processing the input through the key pad as the text. The processing of the user input to create the message includes, processing the user input as an image when the input mode is a drawing input mode, and inserting the image into the message.

In certain embodiments, the inserting the image into the message includes removing a blank region in which the user input is not detected from an entire region of the image, and inserting the image from which the blank is removed into the message.

In certain embodiments, the processing of the user input to create the message includes searching a character or an image corresponding to the user input when the input mode is an equation or drawing input mode, processing the user input as the character or the image according to the search result, and inserting an equation or a drawing into the message.

In certain embodiments, the determining of the input mode includes displaying a menu for selecting an equation or drawing input mode, and determining the input mode based on an input for selecting the input mode when an input for selecting the input mode is detected through the menu.

In certain embodiments, the processing of the user input to create the message includes displaying an input window corresponding to the input mode, and processing an input through the input window according to the input mode when the input through the input window is detected.

In certain embodiments, the input window has a fixed size which is not changed according to a view display direction including a landscape mode and a portrait mode of the portable device.

In certain embodiments, the processing of the user input to create the message includes processing the input, arranging and inserting the input into the message, and scrolling the message in a predetermined direction when a new input not corresponding to the input region is detected.

In accordance with an aspect of the present disclosure, a method for processing an input in a portable device further includes: detecting an input for the input contents of the message determining an input mode corresponding to the input contents, and displaying an edit view of the input contents corresponding to the input mode.

In accordance with an aspect of the present disclosure, a method for processing an input in a portable device further includes: transmitting meta data including information on the at least one input mode for the input contents of the message together with the message when an input for a transmission request for the message is detected, wherein the meta message is used so that the portable device receiving the message edits the message according to the at least one input mode.

In accordance with another aspect of the present disclosure, a portable device includes an input unit detecting a user input; a controller determining whether the user input through the input unit corresponds to an input region when the user input is detected, determining an input mode including at least one of a text input, a drawing input, an equation input, and a drawing input when the input corresponds to the input region, and processing the input to create a message, and a display unit displaying the message under control of the controller, wherein the message comprises at least one input content processed according to at least one input mode.

In certain embodiments, the controller sets the input mode corresponding to the input when the user input corresponds to an input mode selection region.

In certain embodiments, the controller controls the display unit to display a key pad when the input mode is a text input mode, determines a text corresponding to an input through the key pad when the input through the key pad is detected, processes the input through the key pad as the text, and inserts the text into the message.

In certain embodiments, the controller processes the user input as an image when the input mode is a drawing input mode, removes a blank region in which the user input is not detected from an entire region of the image, and inserts the image from which the blank is removed into the message.

In certain embodiments, the controller controls the display unit to display a menu for selecting an equation or drawing input mode, and determines the input mode based on an input for selecting the input mode when the input unit detects the input for selecting the input mode through the menu.

In certain embodiments, the controller identifies a character or an image corresponding to the user input when the input mode is an equation or drawing input mode, and processes the user input as the character or the image according to the search result.

In certain embodiments, the controller controls the display unit to display an input window corresponding to the input mode, and processes an input through the input window according to the input mode when the input through the input window is detected.

In accordance with another aspect of the present disclosure, a portable device further includes a memory to store meta data including the input contents of the message generated by processing the input and information on the input mode of the input contents.

Before undertaking the DETAILED DESCRIPTION OF THE DISCLOSURE below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating a configuration of a portable device according to an embodiment of the present disclosure;
FIG. 2 is a flowchart illustrating a method for processing an input in a portable device according to an embodiment of the present disclosure;
FIG. 3 illustrates an example of an input view;
FIG. 4 is a flowchart illustrating a method for processing an input in a portable device in a text input mode according to an embodiment of the present disclosure;
FIG. 5 illustrates a message input in a text input mode according to an embodiment of the present disclosure;
FIG. 6 is a flowchart illustrating a method for processing an input in a portable device in a drawing input mode according to an embodiment of the present disclosure;
FIG. 7 illustrates an input view in the drawing input mode according to an embodiment of the present disclosure;
FIG. 8 illustrates an image insertion view in a drawing input mode according to an embodiment of the present disclosure;
FIG. 9 is a flowchart illustrating a method for processing an input in a portable device in an equation or drawing input mode according to an embodiment of the present disclosure;
FIG. 10 illustrates a message input view in an equation or drawing input mode according to an embodiment of the present disclosure;
FIG. 11 illustrates an input window in an equation input mode according to an embodiment of the present disclosure;
FIG. 12 illustrates an input window in a drawing input mode according to an embodiment of the present disclosure;
FIG. 13 illustrates an example of a created message according to an embodiment of the present disclosure;
FIG. 14 is a flowchart illustrating a method for editing a message according to an embodiment of the present disclosure; and
FIG. 15 illustrates selecting input contents according to an embodiment of the present disclosure.

### DETAILED DESCRIPTION OF THE DISCLOSURE

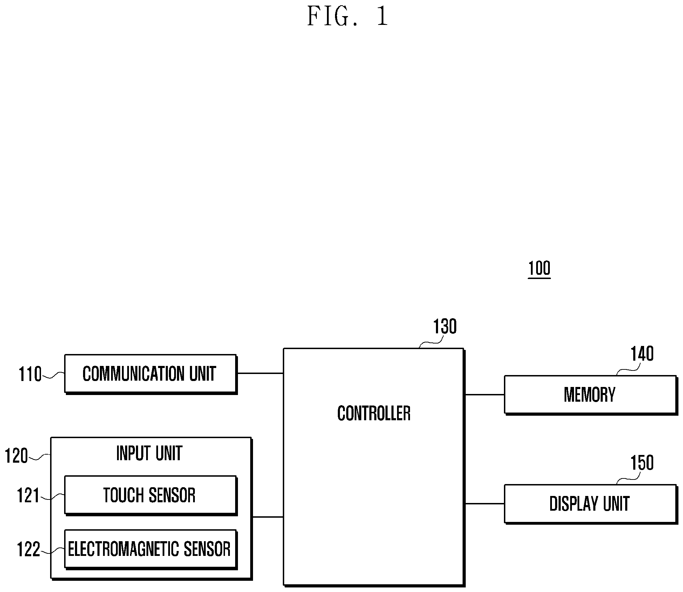

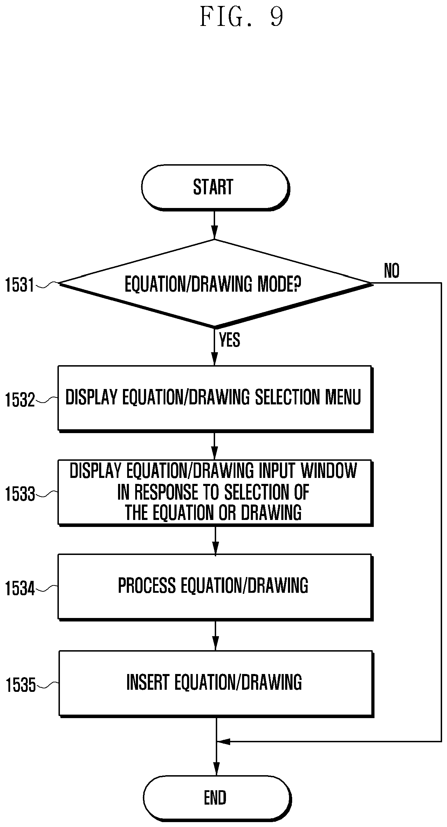

FIGURES 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Embodiments of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

The present disclosure is applicable to process an input in a portable device for providing input of a text, a hand writing, and equation/drawing.

Further, the present disclosure is a portable device for providing input of a text, a hand writing, and equation/drawing. The present disclosure is applicable to all devices for providing input of various modes as well as electronic terminals such as a smart phone, a portable terminal, a mobile terminal, a Personal Digital Assistant (PDA), a portable multimedia player (PMP) terminal, a note pad, a Wibro terminal, and a tablet PC.

Hereinafter, embodiments of the present disclosure will be described in detail with reference to the accompanying drawings.

FIG. 1 is a block diagram illustrating a configuration of a portable device according to an embodiment of the present disclosure.

Referring to FIG. 1, the portable device 100 can include a communication unit 110, an input unit 120, a controller 130, a memory 140, and a display unit 150.

The communication unit 110 performs a wireless communication function with a base station or other devices. The communication unit 110 can be a radio frequency (RF) communication unit including a transmitter for up-converting a frequency of a transmitted signal and amplifying the converted signal, and a receiver for low-noise-amplifying a received signal and down-converting the amplified signal. Further, the communication unit 110 can include a modulator and a demodulator. The modulator modulates the transmitted signal and transfers the modulated transmitted signal to the transmitter, and the demodulator demodulates a signal received through the receiver. In this case, the modulator and the demodulator can be LTE, WCDMA, GSM or WIFI, WIBRO. The communication unit 110 is connected to a public wireless communication network and/or Internet and can perform a wireless communication function between the portable device 100 and a corresponding network. The communication unit 110 can include an LTE communication unit and a WI-FI communication unit capable of communicating with an LTE base station.

The input unit 120 can include a touch sensor 121 and an electromagnetic sensor 122. The touch sensor 121 can detect a touch input of a user. For example, the touch sensor 121 can include a form such as a touch film, a touch sheet, and a touch pad. The touch sensor 121 can detect a touch input and transfer a detected touch signal to the controller 130. In this case, information corresponding to the detected touch signal can be displayed on the display unit 150.

The touch sensor 121 receives an operation signal according to touch input of the user by various input means. The touch sensor 121 can receive an operation signal according to a body (e.g., hand) of the user, a physical tool. The touch sensor 121 can detect a direct touch and a proximity input within a predetermined distance.

The electromagnetic sensor 122 detects a touch or proximity input according to intensity change of an electromagnetic field. The electromagnetic sensor 122 can include a coil inducing a magnetic field, and detects approach of an object including a resonance circuit causing energy change of a magnetic field generated from the electromagnetic sensor 122. The electromagnetic sensor 122 can be a pen including a stylus pen and digitizer pen as an object including a resonance circuit. The electromagnetic sensor 122 can detect an input making contact with the portable device 100 and proximity input or hovering achieved in the vicinity of the portable device 100. An input means for generating an input for the electromagnetic sensor 122 can include a key, a button, and a dial. The input means can vary energy of a magnetic field according to an operation state of the key, a button, and a dial. Accordingly, the electromagnetic sensor 122 can detect an operation state of a key, a button, and a dial of the input means.

The input unit 120 can include an input pad. The input unit 120 can be configured where the touch sensor 121 and the electromagnetic sensor 122 are mounted on the input pad.

The input unit 120 can include a touch sensor 121 attached on the input pad in the form of a film or which is coupled in the form of a panel as the input pad. The input unit 120 can include an input pad of Electro Magnetic Resonance (EMR) or Electro Magnetic Interference (EMI) scheme using the electromagnetic sensor 122. The input unit 120 can be configured by at least one input pad having a mutual layer structure in order to detect an input using a plurality of sensors.

The input unit 120 has a layer structure with the display unit 150 and can act as an input screen. For example, the input unit 120 includes an input pad with the touch sensor 121 and a Touch Screen Panel (TSP) coupled with the display unit 150. The input unit 120 can include an input pad with the electromagnetic sensor 122, and can be coupled with the display unit 150 configured as a display panel.

Further, the input unit 120 can have a layer structure with the display unit 150. In this case, the input unit is disposed at a lower layer of the display unit 150 to detect an input generated through an icon, a menu, and a button displayed on the display unit 150. In general, the display unit 150 can have the form of the display panel, and can be configured as a TSP panel coupled with the input pad.

According to one embodiment of the present disclosure, the input unit 120 detects selection of an input mode and an input for creating a message in a predetermined input mode. If the input is detected, the input unit 120 generates an input signal including information on a location of the detected input, and transfers the input signal to the controller 130.

The controller 130 can control respective constituent elements for an overall operation of the portable device 100. For example, the controller 130 can process an input received according to the input mode during creation of the message to combine and create contents input to one message.

According to one embodiment of the present disclosure, if a user input is detected through the input unit 120, in a case where the input corresponds to the input region, the controller 130 determines the input mode to process the input according to the input mode. The controller 130 creates a message by using the processed input as input contents.

A detailed operation of the controller 130 will be described with reference to the accompanying drawings.

The memory 140 stores programs or instructions for the portable device 100. The controller 130 performs the programs or the instructions stored in the memory 140.

The memory 140 can include at least one storage medium of a flash memory type, a hard disk type, a multimedia card micro type, card type memory (e.g., SD or XD memory, etc.), a Random Access Memory (RAM), a Static Random Access Memory (SRAM), a Read-Only Memory (ROM), an Electrically Erasable Programmable Read-Only Memory (EEPROM), and a Programmable Read-Only Memory (PROM).

According to one embodiment of the present disclosure, the memory 140 stores meta data including input contents of a message generated by processing the input and information on the input mode of the input contents.

The memory 140 can transmit a message and meta data associated with the message to other portable devices through the communication unit 110.

The display unit 150 displays (outputs) information processed by the portable device 100. For example, the display unit 150 can display an input window corresponding to an input mode and contents corresponding to a user input together with User Interface (UI) or Graphic User Interface (GUI).

The display unit 150 can include at least one of a liquid crystal display (LCD), a thin film transistor-liquid crystal display, (TFT LCD), an organic light-emitting diode (OLED), a flexible display, and a three-dimensional (3D) display.

The display unit 150 can have a mutual layer structure with the touch sensor 121 and/or the electromagnetic sensor 122 and acts as a touch screen. In this case, the display unit 150 functioning as the touch screen can perform a function of the input unit 110.

According to one embodiment of the present disclosure, the display unit 150 displays a message creation view under the control of the controller 130. The message creation view can include at least one information region, input mode selection region, and input region. Further, the display unit 150 displays the created message. The display unit 150 can display a message including at least one input content which is created and processed in at least one input mode.

The constituent elements shown in FIG. 1 is not essential, a portable device 100 having more or less constituent elements shown in FIG. 1 can be implemented.

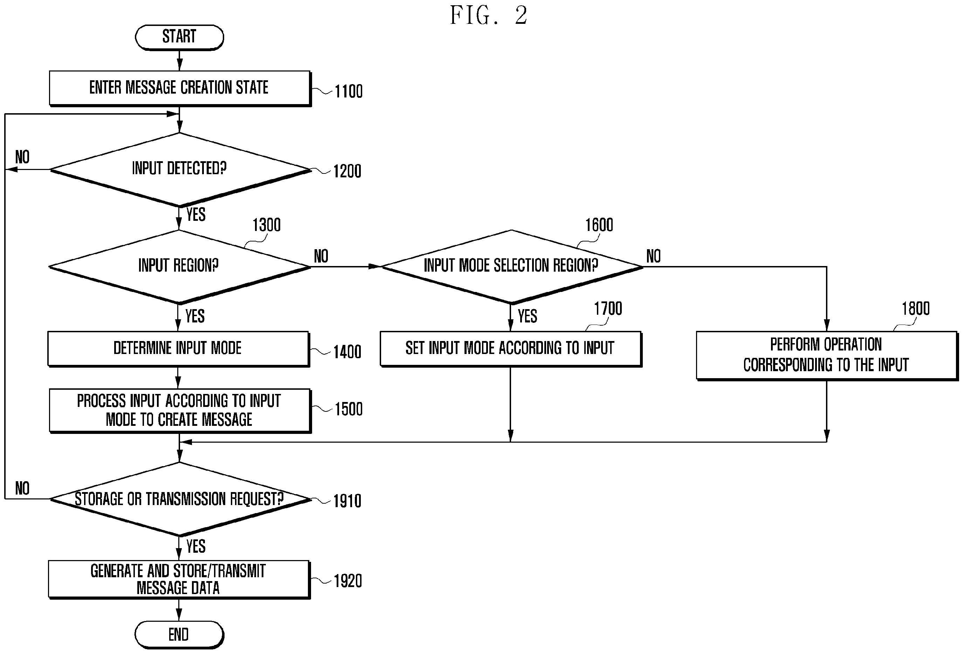

FIG. 2 is a flowchart illustrating a method for processing an input in a portable device according to an embodiment of the present disclosure

Referring to FIG. 2, a controller 130 enters a message creation station state (1100). When a user input for creating a message through an input unit 110 or creation of the message is required according to driving of an application, an application, or a service, the controller 130 enters a message creation state.

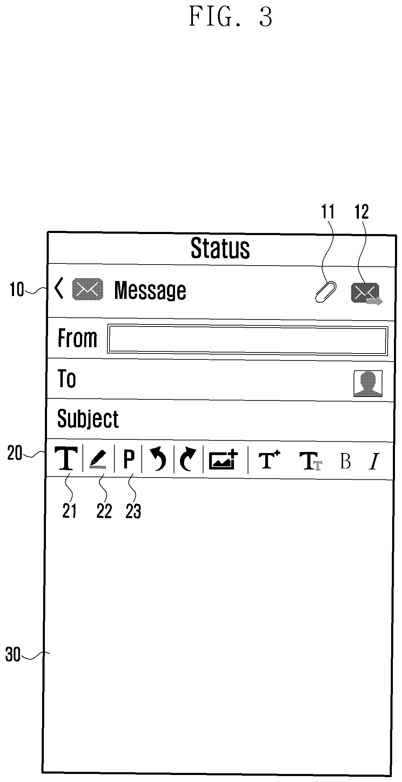

The controller 130 can enter a message creation state according to driving an application such as mail transmission, character transmission, memo creation, and diary creation. The controller 130 can control the display unit 150 to display a message creation view according entering the message creation state. Referring to FIG. 3, the message creation view can include an information region 10, an input mode selection region 20, and an input region 30. The information region 10 is a region for displaying information on the message, and can include information on an application providing a message creation function and message information with a message title, and a message number. Further, the information region 10 can include an icon 11 indicating whether a file is attached and an icon for terminating creation of the message or transmitting terminated message. When the message is crated for transmitting a mail or a character, the information region 10 can include information about a transmitter and a receiver. The input mode selection region 20 is a region for receiving selection of the input mode, and can include an icon corresponding to at least one input mode provided for creating the message. In one embodiment of the present disclosure, the input mode selection region 20 can include a text input mode icon 21, a drawing input mode icon 22, an equation or drawing input mode icon 23. The input mode selection region 20 can include an icon capable of setting a message creation mode corresponding to each input mode. For example, the input mode selection region 20 can include a pen attribute selection icon, an eraser attribute selection icon, an image addition icon, and a file attaching icon.

The input region 30 is a region capable of receiving a user input, and can display contents of the created message simultaneously with input of the contents of the message. Next, the controller 130 determines whether an input is detected (1200).

If the user input is generated, the input unit 110 generates an input signal including input location information and transfers the input signal to the controller 130. The controller 130 can determine whether an input is detected according to whether an input signal is received from the input unit 110.

If the input is detected, the controller 130 determines whether the input is detected at an input region (1300).

The controller 130 determines whether an input is detected and a detected position of the input based on the input signal received from the input unit 110. The controller 130 can determine whether the input is detected on the message creation view and at which region of the message creation view the input is detected based on the determination result.

If the input is detected at the input region, the controller 130 determines an input mode (1400).

The controller 130 can determine an input mode based on the input mode setting state according to the user input, an input mode state set upon creation of a final message or an input mode setting state due to a default value. The controller 130 can receive selection of an input mode from the user through the input mode setting region 20. A method of setting an input mode by the user will be described later. According to one embodiment of the present disclosure, the input mode can include at least one of a text input, a drawing input, an equation input, and a drawing input.

Next, the controller 130 processes an input according to the input mode to create the message (1500). The controller 130 processes text, image, equation, or drawing corresponding to an input according to the input mode to create the message. Hereinafter, the following is a detailed embodiment which processes an input according to each input to create the message.

### First embodiment - text input mode

If the input mode is a text input mode, the controller 130 processes text corresponding to the input to create a message.

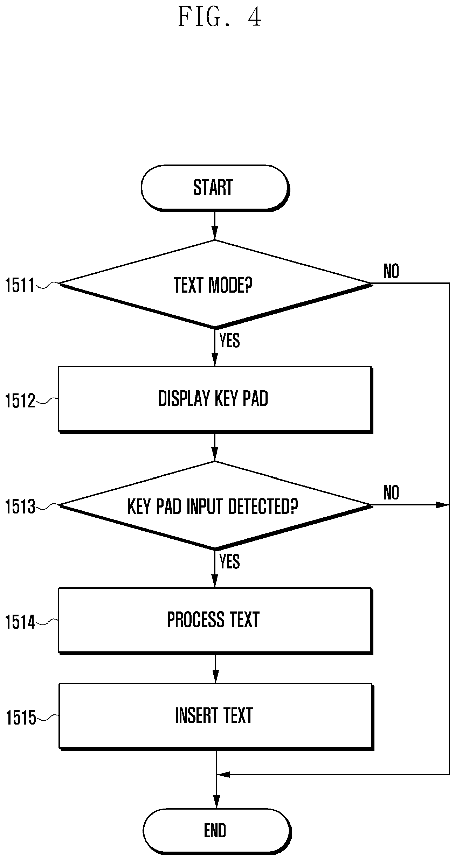

In detail, referring to FIG. 4, the controller 130 determines whether the input mode is the text input mode (1511). If the input mode is the text input mode, the controller 130 can display a key pad (1512).

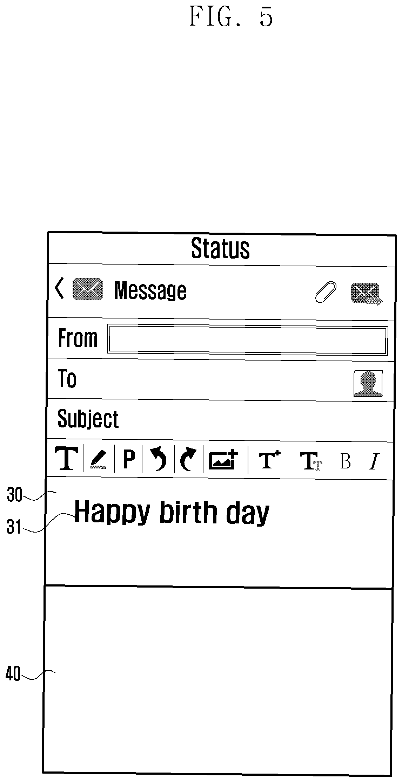

As shown in FIG. 5, the controller 130 can control the display unit 150 to display a key pad 40 for providing a text interface. The key pad 40 can be configured by at least one character, numeral, special symbol. The key pad 40 can be stored in the memory 140, can be stored upon manufacture of the portable device 100 or can be downloaded from a server. The key pad 40 can be configured by a format such as chunjiin or qwerty by a manufacturer or a provider of the key pad 40.

The controller 130 can control the display unit 150 to display the key pad 40 by applying a slide effect and an animation effect. For example, the controller 130 can display the key pad 40 by applying a slide effect slidably lifting upward. Next, the controller 130 can determine whether an input through the key pad is detected (1513). If the input signal is received from the input unit 110, the controller 130 can determine whether an input is detected through the key pad 40 based on an input signal. If the input through the key pad is detected, the controller 130 can process text corresponding to the input (1514).

The controller 130 can determine a text corresponding to the input. The controller 130 can determine a location in which the input is generated based on the input signal to extract a text corresponding to the input location. If the text corresponding to the input location is extracted, the controller 130 can process the input detected through the key pad 40 as a text corresponding to the input. For example, when the input is detected on the key pad 40 of FIG. 5 and a text corresponding to the input location is 'H', the controller 130 can process the input 'H'.

After that, the controller 130 can insert the processed text into the message (1515).

The controller 130 can insert the processed text into the message to create the message. In this case, the controller 130 can control the display unit 150 to display the created message on the input region 30. For example, if the processed text is an 'H', the controller 130 can insert the 'H' into the message to create the message, and display the 'H' on the input region 30. The controller 130 can arrange and insert the text suited to the size and the format of the input region 30. The controller 130 can process a text corresponding to the input to create the message while the input through the key pad 40 is repeatedly detected. Referring to FIG. 5, the controller 130 can process the repeated detected input as the text to create a message as text input contents 31 with "Happy birth day".

While the message is created in the text input mode, when an input of changing the input mode is detected or the input is detected at a region other than the key pad 40, the controller 130 can control the display unit 150 to hide the display key pad. In this case, the controller 130 can control the display unit 150 to hide the key pad 40 by applying a slide effect and an animation effect. For example, if the input is detected at the input region 30 other than the key pad 40, the controller 130 can hide the key pad 40 by applying a slide effect slidably downing to a bottom of the view and disappearing.

While the message is created in the text input mode, when an input changing the input mode or when the input is detected at a region other than the key pad 40, the controller 130 can control the display unit 150 to scroll a message including text input contents 31 in a predetermined direction. The controller 130 can hide some of created input contents by scrolling the message in a predetermined direction, thereby enlarging a blank for creating an additional message in the input region 30.

### Second embodiment - drawing input mode

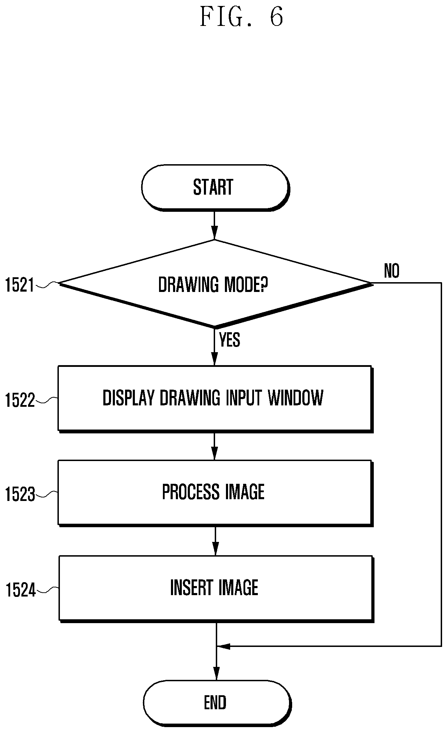

If the input mode is a drawing input mode, the controller 130 process an input as an image to create a message. In detail, referring to FIG. 6, the controller 130 determines whether the input mode is a drawing input mode (1521). If the input mode is the drawing input mode, the controller 130 can display an input window for drawing input (1522).

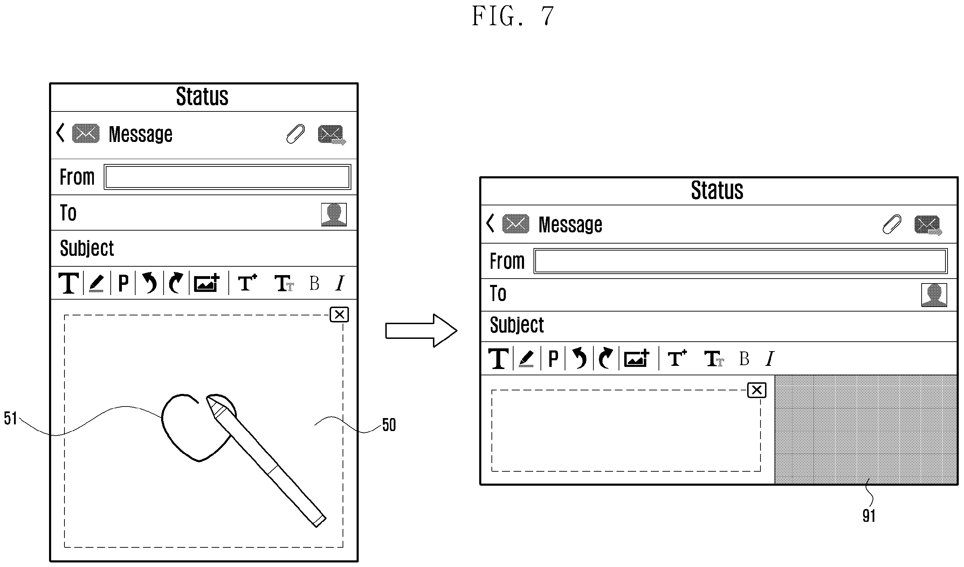

As shown in FIG. 7, the controller 130 can control the display unit 150 to display an input window 50 for providing a region to which drawing can be input.

The input window 50 can include an edge line for setting a region to which the drawing can be input. The input window 50 can include an icon capable of terminating a drawing mode.

In one embodiment of the present disclosure, the input window 50 can have a fixed size and form. The input window 50 can have a fixed size and form which are not changed according to a display direction of a view. For example, referring to FIG. 7, an input window 50 when the portable device 100 displays a view in a portrait mode and an input window when the portable device 100 displays the view in a landscape mode can have the same size and form. In this case, a view display direction is switched in a state that the input window 50 is fixed, a blank 90 displayed on the display unit 150 of the portable device 100 can be processed as a dead space.

Next, the controller 130 can process an input detected through a drawing input window as an image (1523). As shown in FIG. 7, the controller 130 can detect a drawing input 51 through the input window 50, and generate an image configured by input tracks of the detected drawing input 51.

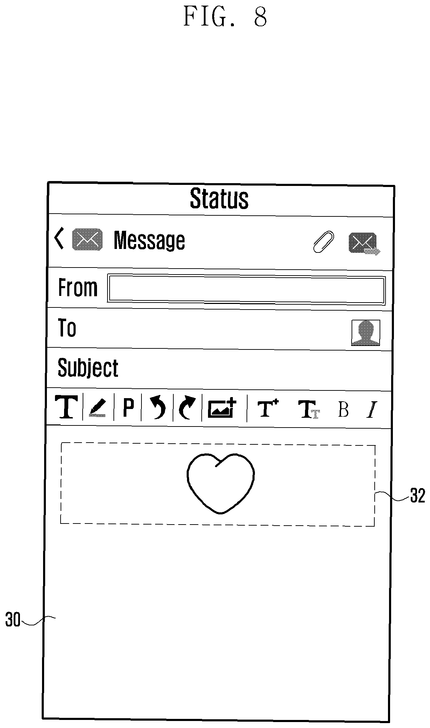

The controller 130 can generate an image with respect to the entire region of the input window 50. In one embodiment of the present disclosure, the controller 130 can generate an image except for a blank region in which an input with the entire region of the input window 50 is not detected. For example, referring to FIG. 7, the controller 130 can detect the drawing input 51 through the input window 50. Further, the controller 130 can generate an image based on a region in which the drawing input 51 is detected except for a blank region among the entire region of the input window 50. The blank region can be excluded in the step of inserting a message. That is, the controller 130 can generate an image with respect to the entire region of the input window 50, and remove the blank region in which an input is not detected from the entire region of the image. As shown in FIG. 8, a message including drawing input contents 32 can be created by inserting an image from which the blank is removed in the message.

The controller 130 can temporarily or permanently store the generated image in the memory 140. The controller 130 can store the generated image associated with the message, and can store a drawing order of the image, information on a drawing track, and an attribute of an applied drawing pen during drawing. Information of an image stored in the memory 140 can be used to edit the generated image.

Next, the controller 130 can insert the generated image into the message (1524). The controller 130 can insert the processed image into the message to create the message. In this case, the controller 130 can control the display unit 150 to display the created message on an input region 30. The controller 130 can arrange and insert the image suited to the size and a format of the input region 30. The controller 130 can attach the generated image to the message as a file, and accordingly display an icon indicating that the file is attached to the message.

In one embodiment of the present disclosure, while creating the message in a drawing input mode, when an input changing an input mode is detected, an input of an icon for terminating a drawing input mode is detected, or the input is detected at a region other than the input window 50, the controller 130 can insert the generated image in the message.

While creating the message in a drawing input mode, when an input changing an input mode is detected or the input is detected at a region other than the input window 50, the controller 130 can control the display unit 150 to scroll a message with drawing input contents in a predetermined direction. The controller 130 hides some of input contents in an input region by scrolling the message in a predetermined direction, thereby enlarging a blank for creating an additional message in the input region 30.

### Third embodiment- equation/drawing input mode

If the input mode is an equation or drawing input mode, the controller 130 processes the input as an equation or a drawing to process the message. In detail, the controller 130 determines whether the input mode is an equation or drawing input mode (1531).

In one embodiment of the present disclosure, when the input mode is the equation or drawing input mode or selection for the equation or drawing input mode is detected, the controller 130 can display a menu capable of selecting one of an equation and a drawing (1532).

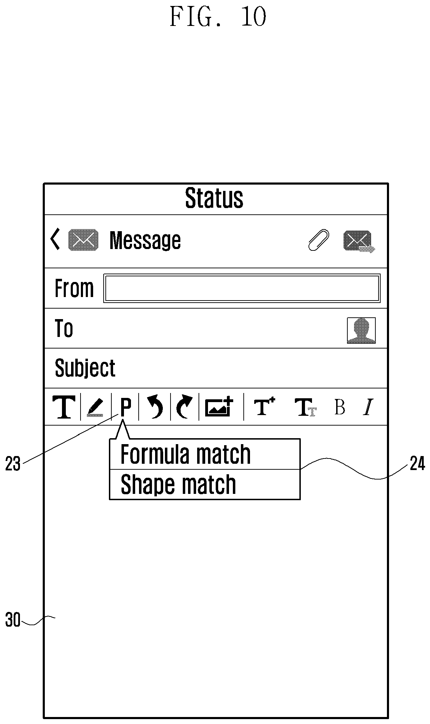

For example, referring to FIG. 10, the controller 130 can detect selection for the equation or drawing input mode through an equation or drawing input mode icon 23. Accordingly, the controller 130 can display a menu 24 capable of selecting one from the equation input mode and the drawing input mode.

If an input selecting one from the equation and the drawing is detected through the menu 24, the controller 130 can perform an operation corresponding to one of the equation input mode and the drawing input mode.

Next, the controller 130 can display an equation or drawing input window (1533). The controller 130 can control the display unit 150 to display the equation input window or the drawing input window in response to selection of the equation or drawing input mode.

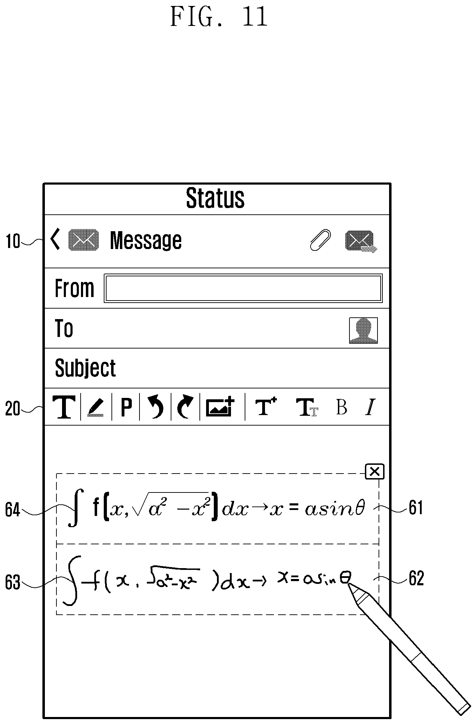

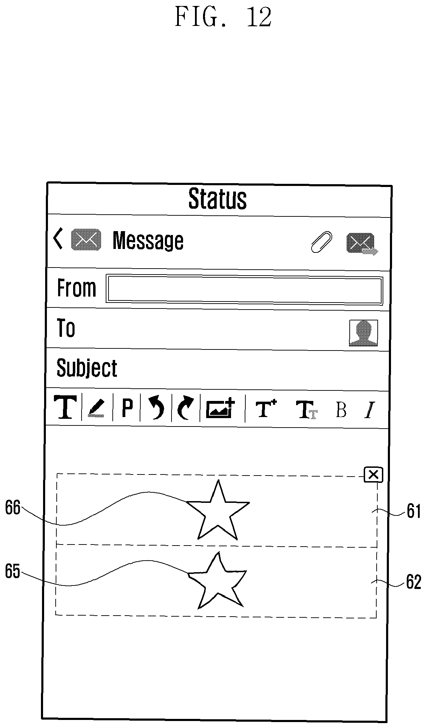

As shown in FIG. 11 or 12, the controller 130 can control the display unit 150 to display an equation input window or a drawing input window for providing a region capable of an equation or a drawing. The equation input window and the drawing input window can include a result display region 61 displaying a result in which an input is processed and an equation input region 62 capable of inputting the equation.

After that, the controller 130 can process an input detected through the equation or drawing input window as the equation or the drawing (1534).

As shown in FIG. 11, the controller 130 can detect an equation input 63 through an equation input region 62 of the equation input window, and can search a character corresponding to the detected equation input 63. For example, if an input "x" is detected through the equation input region 62, the controller 130 can search a character corresponding to the input. The controller 130 can analyze a track and a form of the input "x", search a character corresponding thereto, and determine "x" as a character corresponding to the input. The controller 130 can process the input as a searched character according to a search result. The controller 130 can display equation input contents 64 configured by processed characters on a result display region 61.

Further, as shown in FIG. 12, the controller 130 can detect a drawing input 65 through a drawing input region 62 of a drawing input window, and search an image corresponding to the detected drawing input 65. The controller 130 can analyze a track and a form of an input to search a corresponding image from an image database. The image database is configured by the user or a manufacturer of the portable device 100, and can include at least one image corresponding to a predetermined input.

The controller 130 can process the input as a searched image according to the search result. The controller 130 can display drawing input contents 66 according to the processed image on a result display region 61.

The controller 130 can temporarily or permanently store the processed equation or drawing in the memory 140. The controller 130 can store the processed equation or drawing associated with the message, and information on an input order. Information stored in the memory 140 can be used to edit the equation or the drawing.

Next, the controller 130 can insert the processed equation or drawing into the message (1535). The controller 130 can insert the processed equation or drawing into the message to create the message. In this case, the controller 130 can control the display unit 150 to display the created message on the input region 30. The controller 130 can arrange and insert the equation or the drawing suited to the size and a format of the input region 30.

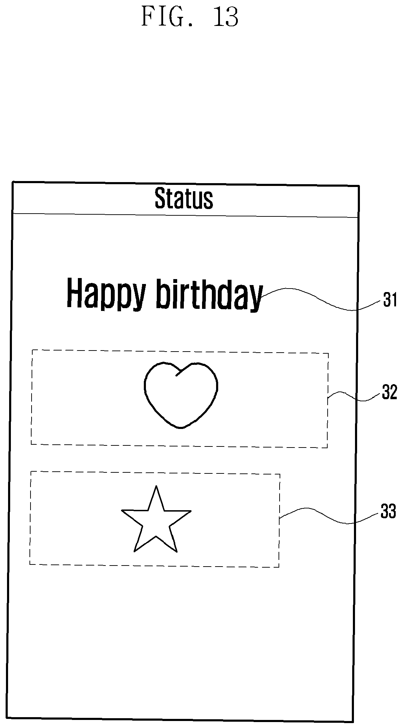

The message created according to one embodiment of the present disclosure includes at least one input content processed in at least one input mode. Referring to FIG. 13, the message can include at least one of text input contents 31 processed in a text input mode, drawing input contents 32 in a drawing input mode, and equation/drawing input contents 33 processed in the equation/drawing input mode.

When the input is not detected on the input region, the controller 130 determines whether the input is detected in the input mode selection region (1600).

The controller 130 determines whether the input is detected and a detected position of the input based on an input signal received from the input unit 110. The controller 130 can determines whether the input is detected in a message creation view and at which region of the message creation view the input is detected. The controller 130 determines whether the input is detected in an input mode selection region 20 of the message creation view.

When the input is detected in the input mode selection region, the controller 130 sets an input mode according to the input (1700).

The controller 130 determines an input mode corresponding to the detected position of the input to set the input mode. For example, if an input with respect to a text input mode icon 21 is detected on the input mode selection region 20 of FIG. 3, the controller 130 can set the input mode as a text input mode, and perform an operation for processing a text input.

When the input is not detected on the input mode selection region, the controller 130 can perform an operation corresponding to the input (1800).

The controller 130 can determine whether a storage or transmission request occurs (1910). The controller 130 can determine whether a storage or transmission request of the message created according to the user input occurs.

If the storage or transmission request occurs, the controller 130 generates and stores or transmits message data to other portable devices (1920).

If the message storage request occurs, the controller 130 stores the message in the memory 140. In this case, the controller 130 can store meta data including information on at least one input mode with respect to input contents of a message associated with the message.

If the message transmission request occurs, the controller 130 can control the communication unit 110 to transmit the message to another portable device. In this case, the controller 130 can transmit meta data associated with the message together with the message to another portable device. The another portable device having simultaneously receiving the meta data and the message can edit the message according to the same input mode as that of the portable device transmitting the message using the meta data.

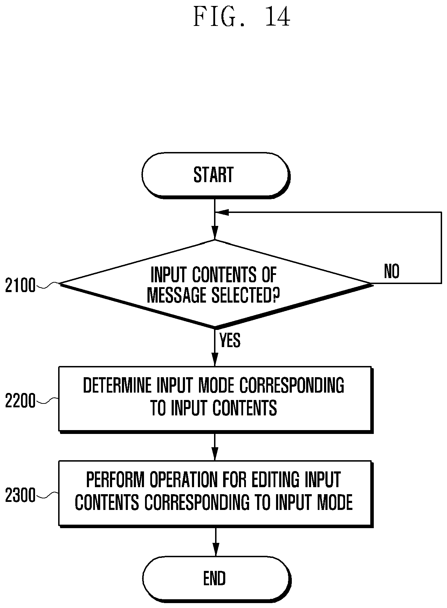

FIG. 14 is a flowchart illustrating a method for editing a message according to an embodiment of the present disclosure.

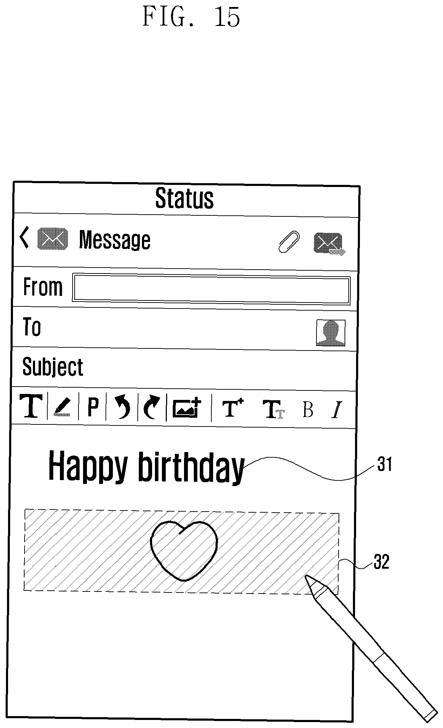

Referring to FIG. 14, the controller 130 determines whether input contents of the message are selected (2100). The controller 130 can control the display unit 150 to display the message including the input contents processed in the at least one input mode. Further, if an input signal is received from the input unit 110 so that an input is detected, the controller 130 determines whether the input is an input selecting input contents included in the message based on the input signal. For example, referring to FIG. 15, the controller 130 can detect an input for selecting drawing input contents from the input contents of the message.

If the input selecting the message input contents is detected, the controller 130 determines an input mode corresponding to the input contents (2200).

The controller 130 determines an input mode in which input contents are created based on meta data stored associated with the message. For example, as shown in FIG. 5, if the drawing input contents 32 are selected, the controller 130 can determine the drawing input mode as an input mode corresponding to the drawing input contents 32 based on the meta data stored associated with the drawing input contents 32.

Next, the controller 130 performs an operation for editing input contents corresponding to the input mode (2300).

The controller 130 can control the display unit 150 to display an edit view corresponding to the input mode in order to edit the input contents. The controller 130 can display input contents on the edit view and edit the input contents according to the user input. The controller 130 can remove or correct the input contents in an input order according to meta data associated with the input contents.

For example, as shown in FIG. 15, if the drawing input contents 32 are selected, the controller 130 can process an edit input of the user as an image according to the drawing input mode.

The method for processing an input in a portable device and a portable device thereof according to the present disclosure can create contents corresponding to various input modes as one message without view switch according to an input mode during creation of the message.

The method for processing an input in a portable device and a portable device thereof according to the present disclosure allow a user to input contents according to various input modes while confirming created message contents to easily create and edit the message.

Although the present disclosure has been described with an embodiment, various changes and modifications may be suggested to one skilled in the art. It is intended that the present disclosure encompass such changes and modifications as fall within the scope of the appended claims.

## Claims

1. A method for processing an input in a portable device, the method comprising:
detecting a user input from an input region;
identifying an input mode from a set of input modes including at least one of a text input, a drawing input, and an equation input, the at least one of a text input, a drawing input, and an equation input being generated by detecting the user input on an input window; and
processing the user input according to the identified input mode to create a message, wherein the message comprises at least one input content processed according to at least one input mode; **characterised in that** it further comprises
transmitting meta data including information on the at least one input mode for the at least one input content of the message together with the message when an input for a transmission request for the message is detected,
wherein the meta data is used so that the portable device receiving the message edits the message according to the at least one input mode.

2. The method of claim 1, wherein the processing of the user input comprises:
displaying a key pad when the input mode is a text input mode;
identifying a text from the user input received through the key pad; and
processing the identified text to create the message.

3. The method of claim 1, wherein the processing of the user input comprises:
processing the user input as an image when the input mode is a drawing input mode; and
inserting the image into the message.

4. The method of claim 3, wherein the inserting the image into the message comprises:
removing a blank region in which the user input is not detected, from an entire region of the image; and
inserting the image whose blank region has been removed into the message.

5. The method of claim 1, wherein the processing of the user input comprises:
identifying a character or an image corresponding to the user input when the input mode is an equation mode or drawing input mode;
processing the user input as the character or the image according to a search result; and
inserting an equation or a drawing into the message.

6. The method of claim 1, wherein the determining of the input mode comprises:
displaying a menu for selecting an equation mode or figure input mode; and
determining the input mode based on an input for selecting the input mode when the input for selecting the input mode is detected through the menu.

7. The method of claim 1, wherein the processing of the user input comprises:
displaying an input window corresponding to the input mode; and
processing an input through the input window according to the input mode when the input through the input window is detected.

8. The method of claim 1, wherein the processing of the user input to create a message comprises:
processing the user input;
arranging and inserting the user input into the message; and
scrolling the message in a predetermined direction when a new input not corresponding to the input region is detected.

9. The method of claim 1, further comprising:
detecting an input for the at least one input content of the message;
determining the input mode corresponding to the at least one input content; and
displaying an edit view of the at least one input content corresponding to the input mode.

10. A portable device comprising:
an input unit configured to detect a user input;
a controller configured to detect the user input from an input region, determine an input mode from a set of input modes including at least one of a text input, a drawing input, and an equation input, the at least one of a text input, a drawing and an equation input being generated by detecting the user input on an input window and process the user input to create a message;
a display unit configured to display the message under control of the controller, wherein the message comprises at least one input content processed according to the determined input mode;
**characterised in that** the portable device further comprising a memory configured to store meta data including the at least one input content of the message generated by processing the input and information on the input mode of the at least one input content.

11. The portable device of claim 10, wherein the controller is configured to control the display unit to display a key pad when the input mode is a text input mode, determine a text corresponding to the user input through the key pad when the user input through the key pad is detected, process the user input through the key pad as the text, and insert the text into the message.

12. The portable device of claim 10, wherein the controller is configured to process the user input as an image when the input mode is a drawing input mode, remove a blank region in which the user input is not detected, from an entire region of the image, and insert the image from which the blank region is removed into the message.

13. The portable device of claim 10, wherein the controller is configured to control the display unit to display a menu for selecting an equation or drawing input mode, and determine the input mode based on an input for selecting the input mode when the input unit is configured to detect the input for selecting the input mode through the menu.

14. The portable device of claim 10, wherein the controller is configured to search a character or an image corresponding to the user input when the input mode is an equation or drawing input mode, and processes the user input as the character or the image according to a search result.

## Patentansprüche

1. Verfahren zum Verarbeiten einer Eingabe in ein tragbares Gerät, wobei das Verfahren Folgendes umfasst:
Erfassen einer Benutzereingabe aus einem Eingabegebiet;
Identifizieren eines Eingabemodus aus einem Satz von Eingabemodi, der mindestens eine von einer Texteingabe, einer Zeichnungseingabe und einer Gleichungseingabe beinhaltet, wobei die mindestens eine von einer Texteingabe, einer Zeichnungseingabe und einer Gleichungseingabe durch Erfassen der Benutzereingabe auf einem Eingabefenster erzeugt wird;
und
Verarbeiten der Benutzereingabe gemäß dem identifizierten Eingabemodus, um eine Mitteilung zu erstellen, wobei die Mitteilung mindestens einen Eingabeinhalt umfasst, der gemäß mindestens einem Eingabemodus verarbeitet wird; **dadurch gekennzeichnet,**
**dass** es ferner Folgendes umfasst:
Senden von Metadaten, die Informationen über den mindestens einen Eingabemodus für den mindestens einen Eingabeinhalt der Mitteilung beinhalten, zusammen mit der Mitteilung, wenn eine Eingabe für eine Sendungsanforderung für die Mitteilung erfasst wird,
wobei die Metadaten so verwendet werden, dass das tragbare Gerät, das die Mitteilung empfängt, die Mitteilung gemäß dem mindestens einen Eingabemodus bearbeitet.

2. Verfahren nach Anspruch 1, wobei das Verarbeiten der Benutzereingabe Folgendes umfasst:
Anzeigen eines Tastenfeldes, wenn der Eingabemodus ein Texteingabemodus ist;
Identifizieren eines Textes aus der Benutzereingabe, die über das Tastenfeld empfangen wird; und
Verarbeiten des identifizierten Textes, um die Mitteilung zu erstellen.

3. Verfahren nach Anspruch 1, wobei das Verarbeiten der Benutzereingabe Folgendes umfasst:
Verarbeiten der Benutzereingabe als ein Bild, wenn der Eingabemodus ein Zeichnungseingabemodus ist; und
Einfügen des Bildes in die Mitteilung.

4. Verfahren nach Anspruch 3, wobei das Einfügen des Bildes in die Mitteilung Folgendes umfasst:
Entfernen eines leeren Gebietes, in dem die Benutzereingabe nicht erfasst wird, aus einem Gesamtgebiet des Bildes; und
Einfügen des Bildes, dessen leeres Gebiet entfernt worden ist, in die Mitteilung.

5. Verfahren nach Anspruch 1, wobei das Verarbeiten der Benutzereingabe Folgendes umfasst:
Identifizieren eines Zeichens oder eines Bildes, das der Benutzereingabe entspricht, wenn der Eingabemodus ein Gleichungsmodus oder Zeichnungseingabemodus ist;
Verarbeiten der Benutzereingabe als das Zeichen oder das Bild gemäß einem Suchergebnis und
Einfügen einer Gleichung oder einer Zeichnung in die Mitteilung.

6. Verfahren nach Anspruch 1, wobei das Ermitteln des Eingabemodus Folgendes umfasst:
Anzeigen eines Menüs zum Auswählen eines Gleichungsmodus oder Zahleneingabemodus und
Ermitteln des Eingabemodus basierend auf einer Eingabe zum Auswählen des Eingabemodus, wenn die Eingabe zum Auswählen des Eingabemodus über das Menü erfasst wird.

7. Verfahren nach Anspruch 1, wobei das Verarbeiten der Benutzereingabe Folgendes umfasst:
Anzeigen eines Eingabefensters, das dem Eingabemodus entspricht; und
Verarbeiten einer Eingabe über das Eingabefenster gemäß dem Eingabemodus, wenn die Eingabe über das Eingabefenster erfasst wird.

8. Verfahren nach Anspruch 1, wobei das Verarbeiten der Benutzereingabe, um eine Mitteilung zu erstellen, Folgendes umfasst:
Verarbeiten der Benutzereingabe;
Anordnen und Einfügen der Benutzereingabe in die Mitteilung und
Rollen der Mitteilung in einer vorgegebenen Richtung, wenn eine neue Eingabe erfasst wird, die nicht dem Eingabegebiet entspricht.

9. Verfahren nach Anspruch 1, das ferner Folgendes umfasst:
Erfassen einer Eingabe für den mindestens einen Eingabeinhalt der Mitteilung;
Ermitteln des Eingabemodus, der dem mindestens einen Eingabeinhalt entspricht; und
Anzeigen einer Bearbeitungsansicht des mindestens einen Eingabeinhalts, der dem Eingabemodus entspricht.

10. Tragbares Gerät, das Folgendes umfasst:
eine Eingabeeinheit, die konfiguriert ist, eine Benutzereingabe zu erfassen;
eine Steuerung, die konfiguriert ist, die Benutzereingabe aus einem Eingabegebiet zu erfassen, einen Eingabemodus aus einem Satz von Eingabemodi zu ermitteln, der mindestens eine von einer Texteingabe, einer Zeichnungseingabe und einer Gleichungseingabe beinhaltet, wobei die mindestens eine von einer Texteingabe, einer Zeichnungs- und einer Gleichungseingabe durch Erfassen der Benutzereingabe auf einem Eingabefenster erzeugt wird, und die Benutzereingabe zu verarbeiten, um eine Mitteilung zu erstellen;
eine Anzeigeeinheit, die konfiguriert ist, die Mitteilung unter Kontrolle der Steuerung anzuzeigen, wobei die Mitteilung mindestens einen Eingabeinhalt umfasst, der gemäß dem ermittelten Eingabemodus verarbeitet wird;
**dadurch gekennzeichnet, dass** das tragbare Gerät ferner einen Speicher umfasst, der konfiguriert ist, Metadaten zu speichern, die den mindestens einen Eingabeinhalt der Mitteilung beinhalten, die durch Verarbeiten der Eingabe und der Informationen über den Eingabemodus des mindestens einen Eingabeinhalts erzeugt worden ist.

11. Tragbares Gerät nach Anspruch 10, wobei die Steuerung konfiguriert ist, die Anzeigeeinheit zu steuern, ein Tastenfeld anzuzeigen, wenn der Eingabemodus ein Texteingabemodus ist, einen Text zu ermitteln, der der Benutzereingabe über das Tastenfeld entspricht, wenn die Benutzereingabe über das Tastenfeld erfasst worden ist, die Benutzereingabe über das Tastenfeld als den Text zu verarbeiten und den Text in die Mitteilung einzufügen.

12. Tragbares Gerät nach Anspruch 10, wobei die Steuerung konfiguriert ist, die Benutzereingabe als ein Bild zu verarbeiten, wenn der Eingabemodus ein Zeichnungseingabemodus ist, ein leeres Gebiet, in dem die Benutzereingabe nicht erfasst wird, aus einem Gesamtgebiet des Bildes zu entfernen und das Bild, aus dem das leere Gebiet entfernt worden ist, in die Mitteilung einzufügen.

13. Tragbares Gerät nach Anspruch 10, wobei die Steuerung konfiguriert ist, die Anzeigeeinheit zu steuern, ein Menü zum Auswählen eines Gleichungs- oder Zeichnungseingabemodus anzuzeigen, und
den Eingabemodus basierend auf einer Eingabe zum Auswählen des Eingabemodus zu ermitteln, wenn die Eingabeeinheit konfiguriert ist, die Eingabe zum Auswählen des Eingabemodus über das Menü zu erfassen.

14. Tragbares Gerät nach Anspruch 10, wobei die Steuerung konfiguriert ist, ein Zeichen oder ein Bild zu suchen, das der Benutzereingabe entspricht, wenn der Eingabemodus ein Gleichungs- oder Zeichnungseingabemodus ist, und die Benutzereingabe als das Zeichen oder das Bild gemäß einem Suchergebnis verarbeitet.

## Revendications

1. Procédé de traitement d'une entrée dans un dispositif portable, le procédé comprenant :
la détection d'une entrée d'utilisateur à partir d'une région d'entrée ;
l'identification d'un mode d'entrée parmi un ensemble de modes d'entrée comprenant au moins l'une d'une entrée de texte, d'une entrée de dessin et d'une entrée d'équation, l'au moins une d'une entrée de texte, d'une entrée de dessin et d'une entrée d'équation étant générée par la détection de l'entrée d'utilisateur dans une fenêtre d'entrée ; et
le traitement de l'entrée d'utilisateur en fonction du mode d'entrée identifié pour créer un message, dans lequel le message comprend au moins un contenu d'entrée traité en fonction d'au moins un mode d'entrée ;
**caractérisé en ce qu'**il comprend en outre :
la transmission de métadonnées comprenant des informations relatives à l'au moins un mode d'entrée pour l'au moins un contenu d'entrée du message avec le message lorsqu'une entrée pour une demande de transmission pour le message est détectée,
dans lequel les métadonnées sont utilisées de sorte que le dispositif portable recevant le message modifie le message en fonction de l'au moins un mode d'entrée.

2. Procédé selon la revendication 1, dans lequel le traitement de l'entrée d'utilisateur comprend :
l'affichage d'un clavier lorsque le mode d'entrée est un mode d'entrée de texte ;
l'identification d'un texte à partir de l'entrée d'utilisateur reçue par l'intermédiaire du clavier ; et
le traitement du texte identifié pour créer le message.

3. Procédé selon la revendication 1, dans lequel le traitement de l'entrée d'utilisateur comprend :
le traitement de l'entrée d'utilisateur en tant qu'une image lorsque le mode d'entrée est un mode d'entrée de dessin ; et
l'insertion de l'image dans le message.

4. Procédé selon la revendication 3, dans lequel l'insertion de l'image dans le message comprend :
la suppression d'une région vide dans laquelle l'entrée d'utilisateur n'est pas détectée, d'une région complète de l'image ; et
l'insertion de l'image de laquelle la région vide a été supprimée dans le message.

5. Procédé selon la revendication 1, dans lequel le traitement de l'entrée d'utilisateur comprend :
l'identification d'un caractère ou d'une image correspondant à l'entrée d'utilisateur lorsque le mode d'entrée est un mode d'équation ou un mode d'entrée de dessin ;
le traitement de l'entrée d'utilisateur en tant que le caractère ou l'image en fonction d'un résultat de recherche ; et
l'insertion d'une équation ou d'un dessin dans le message.

6. Procédé selon la revendication 1, dans lequel la détermination du mode d'entrée comprend :
l'affichage d'un menu pour sélectionner un mode d'équation ou un mode d'entrée de figure ; et
la détermination du mode d'entrée sur la base d'une entrée pour sélectionner le mode d'entrée lorsque l'entrée pour sélectionner le mode d'entrée est détectée par l'intermédiaire du menu.

7. Procédé selon la revendication 1, dans lequel le traitement de l'entrée d'utilisateur comprend :
l'affichage d'une fenêtre d'entrée correspondant au mode d'entrée ; et
le traitement d'une entrée par l'intermédiaire de la fenêtre d'entrée en fonction du mode d'entrée lorsque l'entrée par l'intermédiaire de la fenêtre d'entrée est détectée.

8. Procédé selon la revendication 1, dans lequel le traitement de l'entrée d'utilisateur pour créer un message comprend :
le traitement de l'entrée d'utilisateur ;
l'agencement et l'insertion de l'entrée d'utilisateur dans le message ; et
le défilement du message dans un sens prédéterminé lorsqu'une nouvelle entrée ne correspondant pas à la région d'entrée est détectée.

9. Procédé selon la revendication 1, comprenant en outre :
la détection d'une entrée pour l'au moins un contenu d'entrée du message ;
la détermination du mode d'entrée correspondant à l'au moins un contenu d'entrée ; et
l'affichage d'une vue de modification de l'au moins un contenu d'entrée correspondant au mode d'entrée.

10. Dispositif portable comprenant :
une unité d'entrée configurée pour effectuer la détection d'une entrée d'utilisateur ;
un organe de commande configuré pour effectuer la détection de l'entrée d'utilisateur à partir d'une région d'entrée ; la détermination d'un mode d'entrée parmi un ensemble de modes d'entrée comprenant au moins l'une d'une entrée de texte, d'une entrée de dessin et d'une entrée d'équation, l'au moins une d'une entrée de texte, d'une entrée de dessin et d'une entrée d'équation étant générée par la détection de l'entrée d'utilisateur dans une fenêtre d'entrée ; et le traitement de l'entrée d'utilisateur pour créer un message ;
une unité d'affichage configurée pour effectuer l'affichage du message sous le contrôle de l'organe de commande, dans lequel le message comprend au moins un contenu d'entrée traité en fonction du mode d'entrée déterminé ;
**caractérisé en ce que** le dispositif portable comprend en outre une mémoire configurée pour effectuer la mémorisation de métadonnées comprenant l'au moins un contenu d'entrée du message généré par le traitement de l'entrée et des informations relatives au mode d'entrée de l'au moins un contenu d'entrée.

11. Dispositif portable selon la revendication 10, dans lequel l'organe de commande est configuré pour commander à l'unité d'affichage d'effectuer l'affichage d'un clavier lorsque le mode d'entrée est un mode d'entrée de texte ; la détermination d'un texte correspondant à l'entrée d'utilisateur par l'intermédiaire du clavier lorsque l'entrée d'utilisateur par l'intermédiaire du clavier est détectée ; le traitement de l'entrée d'utilisateur par l'intermédiaire du clavier en tant que texte ; et l'insertion du texte dans le message.

12. Dispositif portable selon la revendication 10, dans lequel l'organe de commande est configuré pour effectuer le traitement de l'entrée d'utilisateur en tant qu'une image lorsque le mode d'entrée est un mode d'entrée de dessin ; la suppression d'une région vide dans laquelle l'entrée d'utilisateur n'est pas détectée, d'une région complète de l'image ; et l'insertion de l'image de laquelle la région vide a été supprimée dans le message.

13. Dispositif portable selon la revendication 10, dans lequel l'organe de commande est configuré pour commander à l'unité d'affichage d'effectuer l'affichage d'un menu pour sélectionner un mode d'entrée d'équation ou de dessin, et la détermination du mode d'entrée sur la base d'une entrée pour sélectionner le mode d'entrée lorsque l'unité d'entrée est configurée pour effectuer la détection de l'entrée pour sélectionner le mode d'entrée par l'intermédiaire du menu.

14. Dispositif portable selon la revendication 10, dans lequel l'organe de commande est configuré pour effectuer la recherche d'un caractère ou d'une image correspondant à l'entrée d'utilisateur lorsque le mode d'entrée est un mode d'entrée d'équation ou de dessin, et le traitement de l'entrée d'utilisateur en tant que le caractère ou l'image en fonction d'un résultat de recherche.
